Europäisches Patentamt

European Patent Office

Office européen des brevets

(19)

(11) **EP 0 631 449 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(51) Int Cl.⁷: **H04Q 3/545**, H04Q 11/04

(21) Anmeldenummer: **94108629.0**

(22) Anmeldetag: **06.06.1994**

(54) **Verfahren zur Inbetriebnahme von dezentralen, redundanten Einrichtungen in Kommunikationssystemen**

Method for putting into operation decentralized redundant devices in communication systems

Procédé pour la mise en service de dispositifs redondants et décentralisés dans des systèmes de communication

(84) Benannte Vertragsstaaten:
**AT BE CH DE DK FR GB IT LI**

(30) Priorität: **16.06.1993 DE 4319877**

(43) Veröffentlichungstag der Anmeldung:
**28.12.1994 Patentblatt 1994/52**

(73) Patentinhaber: **SIEMENS AKTIENGESELLSCHAFT**
**80333 München (DE)**

(72) Erfinder: **Löbig, Norbert, Dr.rer.nat.**
**D-64291 Darmstadt (DE)**

(56) Entgegenhaltungen:
EP-A- 0 062 296      EP-A- 0 294 644
DE-A- 3 634 863      DE-A- 4 134 207

- **IEEE INFOCOM-PROCEEDINGS OF THE SIXTH ANNUAL CONFERENCE ON COMPUTER COMMUNICATIONS, 31.März 1987 - 2.April 1987, SAN FRANCISCO (US), Seiten 112-116, XP002020744 A. KUNDU ET AL: "Optimization of down line load performance for centralized hierarchical network management systems"**
- **SIEMENS TELCOM REPORT, Bd. 11, Nr. 6, November 1988, BERLIN & MUNICH, Seiten 204-209, XP000000765 N. SKAPERDA: "EWSD morgen - zukunftsichere Kommunikation"**

**Beschreibung**

Die Erfindung betrifft ein Verfahren gemäß dem Oberbegriff der Patentansprüche 1 und 2.

Die Bereitstellung neuer Leistungsmerkmale und Dienste hat in den letzten Jahren zu einer Erhöhung des Komplexitätsgrades zeitgemäßer Kommunikationssysteme geführt. Dies bedeutet, daß ein Kommunikationssystem aus einer Vielzahl von Einrichtungen und die diese steuernden Prozeduren aufgebaut ist, die in ihrem Zusammenwirken untereinander die Steuerung des Kommunikationsflusses und der jeweils angeforderten Dienste bewirken. Die Bearbeitung und Steuerung der anstehenden Aufgaben wird in zeitgemäßen Kommunikationssystemen durch eine Dezentralisierung von Intelligenzleistung realisiert. Dies bedeutet, daß Programme und Daten, die in früheren Systemen in der zentralen Steuereinrichtung abgespeichert waren und dort zum Ablauf gelangt sind, zur Peripherie hin verlagert sind und dort unabhängig von der zentralen Steuereinrichtung anstehende Aufgaben bearbeiten. Dies hat insbesondere den Vorteil, daß selbst ein Ausfall der zentralen Steuereinrichtung, die heute Koordinierungsaufgaben im Kommunikationssystem wahrnimmt, nicht unbedingt zur totalen Einschränkung des Kommunikationsverkehrs führen muß. Allerdings müssen andererseits die die Peripherie betreffenden Programme und Daten bei Inbetriebnahme des Kommunikationssystems von einem externen Speichermedium zu jenen peripheren Einrichtungen übertragen und dort abgespeichert werden. Diese Erfordernis besteht ebenso nach einem Ausfall bzw. teilweisen Ausfall des Kommunikationssystems oder gar bei einer Erweiterung mit neuen peripheren Einrichtungen.

Bei Inbetriebnahme werden die peripheren Einrichtungen von der zentralen Steuereinrichtung mit Programminformation (vermittlungstechnische, betriebstechnische und administrative Programme) sowie mit der der peripheren Einrichtung zugehörigen Dateninformation (d.h. Daten bezüglich Anschlußlage, Signalisierung, Berechtigungen, Rufnummern und weiteren individuellen Charakteristika von Verbindungsleitungen und Teilnehmeranschlüssen sowie bezüglich des Ausbauzustandes und der Konfiguration der peripheren Einrichtung) geladen. Die in die Peripherie zu ladenden Programm- und Datenmengen sind erheblich und mit dem Trend zu immer leistungsfähigeren Kommunikationssystemen in starkem Wachstum begriffen.

Aufgrund der anfallenden Datenmengen sowie der hohen Anzahl von Programmen dauern jedoch die Ladevorgänge von dem externen Speichermedium in die peripheren Einrichtungen sehr lange. Da zeitgemäße Kommunikationssysteme ständig um neue Dienste und Leistungsmerkmale erweitert und somit auch die diese steuernden Programme und Daten immer umfangreicher werden, kommt der Reduzierung der Ladezeiten eine immer größere Bedeutung zu. Da generell an ein Kommunikationssystem andere Anforderungen hinsichtlich der Zuverlässigkeit gestellt werden als an viele andere technische Systeme und Anlagen wie beispielsweise Datenverarbeitungsanlagen, müssen die Ladevorgänge möglichst schnell ausgeführt werden, damit das Kommunikationssystem im Rahmen seiner Kapazitäten möglichst jederzeit für alle Teilnehmer verfügbar ist, eine Forderung, die auch von CCITT und Bellcore an Kommunikationssysteme gestellt wird. Dieser Forderung wird insbesondere nicht nur durch die redundante Ausprägung der zentralen Steuereinrichtung und Nachrichtenverteilereinheiten, sondern auch durch die Doppelung der peripheren Einrichtungen selbst Rechnung getragen. Während des Ladens der Peripherie oder von Teilen der Peripherie mit Programm- bzw. Dateninformation ist i.a. die vermittlungstechnische Verfügbarkeit des Kommunikationssystems nicht vorhanden oder stark eingeschränkt, so daß ein möglichst schneller Anlauf und damit ein möglichst schnelles Laden der Peripherie in Wiederanlaufsituationen (beispielsweise nach Softwarefehlern) gefordert wird (Bellcore Requirements TR-TSY-509, TR-TSY-512, TA-TSY-284, TA-TSY-1047, CCITT Q.700, Q.706, Q.725). Die Ladezeiten selbst werden in erster Linie begrenzt durch die Übertragungsrate des Kommunikationssystems in Richtung Peripherie, ferner auch durch die Performance der zentralen Steuereinrichtung zur Bereitstellung der Ladeinformation und die Übertragungsleistung auf der Schnittstelle zwischen der zentralen Steuereinrichtung und den Nachrichtenverteilereinheiten. Da eine Hälfte einer gedoppelten peripheren Einrichtung im Fehlerfalle die Arbeit der ausgefallenen Hälfte ohne wesentlichen Verlust von stabilen Verbindungen übernehmen muß (Bellcore Requirement maximal 64 Verbindungen zulässig), werden i.a. Programm- und Dateninformationen im Rahmen des Anlaufs in beide Hälften der peripheren Einrichtung geladen. Während des Betriebs erfolgen Aktualisierungen des jeweiligen Partners hinsichtlich der Dateninformation, wozu i.a. eine Synchronverbindung zwischen beiden Hälften der peripheren Einrichtung vorgesehen ist.

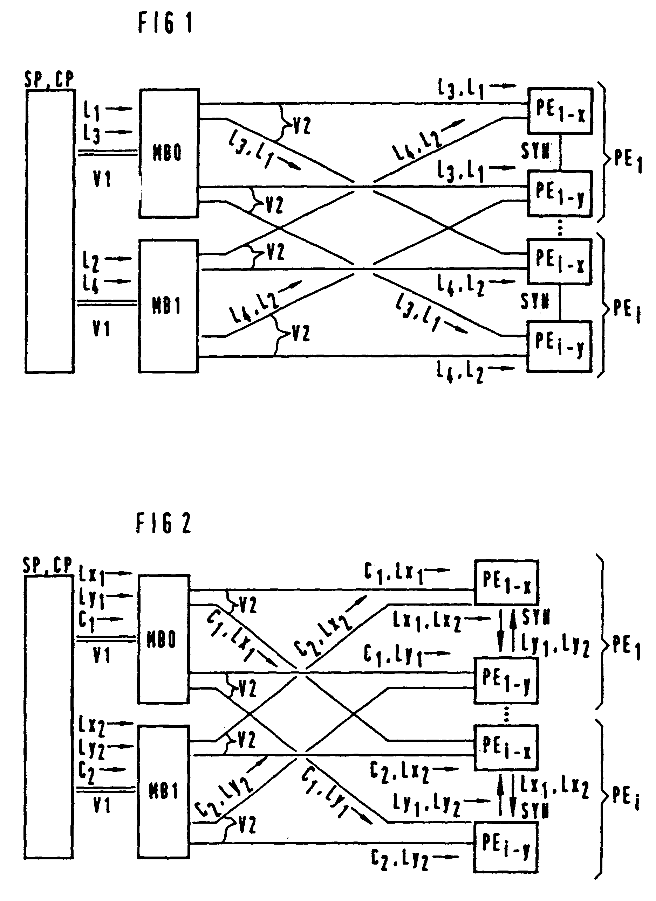

In der europäischen Patentschrift 0 294 644 B1 ist ein Verfahren beschrieben, wie die Übertragung von Daten und Programmen in die peripheren Einrichtungen eines Kommunikationssystems durchgeführt werden kann. Dort ist vorgesehen, daß in zwei Übertragungsprozessen Programme und Daten in die peripheren Einrichtungen übertragen werden. Dabei wird der erste Übertragungsprozeß jeweils vor Beginn des vermittlungstechnischen Betriebsablaufs durchgeführt, während der zweite Übertragungsprozeß nach Beginn des vermittlungstechnischen Betriebsablaufs durchgeführt wird. Insbesondere während des zweiten Übertragungsprozesses werden teilnehmerspezifische Daten nach Bedarf nachgeladen. Eine Modifizierung dieses Verfahrens hinsichtlich des ersten Übertragungsprozesses für den Fall gedoppelter und mit einer Synchronverbindung versehenen peripheren Einrichtungen ist im weiteren in Figur 1 aufgezeigt:

Darin sind ein externes Speichermedium sowie eine zentrale Steuereinrichtung über 2 Verbindungsleitungen an ein Paar von redundanten Nachrichtenverteilereinheiten, welche die gesicherte Übertragung der Ladenachrichten wie auch der normalen vermittlungs- und betriebstechnischen Steuernachrichten vornehmen, herangeführt. Diese sind wiederum über weitere Verbindungsleitungen mit paarweise angeordneten redundanten peripheren Einrichtungen verbunden, wobei beide Nachrichtenverteilereinheiten des Paares von Nachrichtenverteilereinheiten mit beiden peripheren Einrichtungen verbunden sind. Die peripheren Einrichtungen eines Paares von peripheren Einrichtungen sind weiterhin über jeweils eine Synchronleitung miteinander verbunden. Das Laden von Programmen und Daten vom externen Speichermedium aus zu den peripheren Einrichtungen geschieht derart, daß alle Programme und Daten zunächst in mehrere Anteile aufgeteilt werden. Im weiteren wird dann eine Übertragung über jeweils beide Verbindungsleitungen zu den daran angeschlossenen Nachrichtenverteilereinheiten durchgeführt. Von diesen erfolgt dann die Übertragung der jeweiligen Anteile zu den peripheren Einrichtungen der jeweiligen zu ladenden Paare von peripheren Einrichtungen. Letztendlich sind nach dem Ladevorgang in jeder Einrichtung eines Paares von redundant angeordneten peripheren Einrichtungen alle die periphere Einrichtung betreffenden Programme und Daten vollständig abgespeichert. Während des vermittlungstechnischen Betriebes werden über die Synchronverbindung aktualisierende Daten zwischen beiden peripheren Einrichtungen übertragen, damit bei Ausfall einer peripheren Einrichtung unmittelbar auf die dazu redundant ausgelegte periphere Einrichtung umgeschaltet werden kann und diese aufgrund ihres aktuellen Datenabbildes den vermittlungstechnischen Kommunikationsverkehr ohne Verzögerung und möglichst verlustfrei übernehmen kann.

Problematisch an einer derartigen Vorgehensweise ist jedoch, daß im Rahmen des ersten Übertragungsprozesses in jede periphere Einrichtung des jeweiligen Paares von redundant angeordneten peripheren Einrichtungen das gesamte, die Peripherie steuernde Programm sowie alle damit verbundenen Daten, insbesondere Basisladedaten, unter Benutzung beider Nachrichtenverteilereinheiten geladen werden. Die die Ladezeit bestimmenden Nachrichtenverteilereinheiten werden somit zwar voll ausgelastet, sie übertragen jedoch in ein Paar redundanter peripherer Einrichtungen die Ladeinformation doppelt. Das Problem gewinnt eine weitere Dimension unter Berücksichtigung der Tatsache, daß i.a. jeder peripheren Einrichtung eine bestimmte Aufgabe zugewiesen wird. So sind beispielsweise bestimmte periphere Einrichtungen ausschließlich für die Übertragung von den Daten verantwortlich, die von anderen Kommunikationssystemen ausgesendet werden (Verbindungsleitungsanschlußeinheit), während andere periphere Einrichtungen ausschließlich Daten von Teilnehmerendgeräten bearbeiten (Teilnehmeranschlußeinheit). Insofern ergibt sich nun bei dem eben geschilderten Stand der Technik das Problem, daß verschiedene Programmgesamtheiten in unterschiedlichen Teilmengen der Paare peripherer Einrichtungen geladen werden müssen, was durch mehrfache Hintereinanderausführung der genannten Abläufe oder durch Bildung einer alle typenspezifischen Programme umfassenden Programmgesamtheit geschieht.

Der Erfindung liegt die Aufgabe zugrunde, ein Verfahren anzugeben, mit dem Programme und Daten beschleunigt in die gedoppelten peripheren Einrichtungen geladen werden und somit die Verfügbarkeit des gesamten Kommunikationssystems erhöht wird.

Die Erfindung wird gemäß den im Patentanspruch 1 bzw. Patentanspruch 2 definierten Merkmalen gelöst.

Vorteilhaft an der Erfindung ist gemäß Patentanspruch 1 die Aufteilung der Programme in einen für alle peripheren Einrichtungen des jeweiligen zu ladenden Programmes gemeinsamen Anteil sowie in für die betroffenen Paare peripherer Einrichtungen spezielle hälftenspezifische Anteile. Die speziellen, hälftenspezifischen Anteile werden dabei zuerst über Verbindungsleitungen in die peripheren Einrichtungen des redundant angeordneten Paares von peripheren Einrichtungen übertragen, wobei in beide peripheren Einrichtungen des jeweiligen Paares von redundant angeordneten peripheren Einrichtungen sich unterscheidende spezielle Anteile des jeweiligen Programms geladen werden. Da beide peripheren Einrichtungen während des vermittlungstechnischen Kommunikationsverkehrs dieselben Programme haben müssen, um bei Ausfall einer peripheren Einrichtung gegebenenfalls auf die dazu redundant angeordnete periphere Einrichtung ohne Zeitverzug und möglichst verlustfrei umschalten zu können, findet ein Austausch der sich unterscheiäenden, speziellen Anteile über die Synchronverbindung statt, so daß danach beide peripheren Einrichtungen des jeweiligen Paares von redundant angeordneten peripheren Einrichtungen dieselben Programmanteile abgespeichert haben. Zeitlich nach dem Übertragungsvorgang der sich unterscheidenden, speziellen Programmanteile über die Nachrichtenverteilereinheiten in die peripheren redundanten Einrichtungen und parallel zu dem Übertragungsvorgang über die Synchronverbindung werden dann die gemeinsamen Anteile zugleich in jede der peripheren Einrichtungen der jeweiligen Paare von redundant angeordneten peripheren Einrichtungen hin übertragen. Eine derartige Vorgehensweise ist insbesondere dort vorteilhaft, wo die Übertragungsleistung der Synchronverbindung weniger als doppelt so hoch ist wie die Übertragungsleistung einer Verbindungsleitung zwischen Nachrichtenverteilereinheit und peripheren Einrichtungen. Weiterhin ist mit einer derartigen Vorgehensweise der Vorteil verbunden, daß nicht mehr das gesamte Programm in eine Hälfte einer gedoppelten peripheren Einrichtung geladen wird, sondern nur noch die hälftespezifischen und gemeinsamen Anteile.

Vorteilhaft gemäß Patentanspruch 2 ist das Aufteilen der die Peripherie betreffenden Programme in ausschließlich spezielle Ladesegmente. Das Laden der speziellen Ladesegmente erfolgt dann in entsprechender Weise, wie in dem zweiten bzw. dritten Verfahrensschritt des Patentanspruchs 1 angegeben. Weiterhin wird auch hier zeitgleich zum Laden der Programminformation über die Verbindungsleitungen zwischen Nachrichtenverteilereinheit und peripheren Einrichtungen ein Austausch der bereits in den jeweiligen peripheren Einrichtungen geladenen Ladesegmente durchgeführt. Eine derartige Vorgehensweise ist insbesondere dann vorteilhaft, wenn die Übertragungsleistung der Synchronverbindung mindestens doppelt so groß ist wie die Übertragungsleistungen einer Verbindungsleitung zwischen Nachrichtenverteilereinheit und peripheren Einrichtungen.

Gemäß Anspruch 3 ist vorgesehen, daß mehrere Programme zeitgleich in n unterschiedliche Gesamtheiten peripherer Einrichtungen geladen werden. Damit ist der Vorteil verbunden, daß die Programme funktionell in die in Frage kommenden peripheren Einrichtungen geladen werden. So wird beispielsweise ein Programm mit Funktionen zur Abwicklung des Verkehrs zu Teilnehmerendgeräten nur in die periphere Einrichtung geladen, an die lediglich Teilnehmerendgeräte angeschlossen sind.

Gemäß Anspruch 4 ist vorgesehen, daß das Segmentieren und Laden von auf dem jeweiligen Speichermedium abgelegten Ladedaten in die peripheren Einrichtungen in entsprechender Weise durchgeführt wird, nachdem das wenigstens eine Programm bzw. die mehreren Programme in die peripheren Einrichtungen geladen wurde. Damit ist der Vorteil verbunden, daß nicht nur Programminformationen von dem externen Speichermedium aus, sondern auch dort abgespeicherte Ladedaten beschleunigt in die in Frage kommenden peripheren Einrichtungen geladen werden können.

Gemäß Anspruch 5 ist vorgesehen, daß das Übertragen der jeweiligen Programm- bzw. Datensegmente über die ersten und zweiten Verbindungsleitungen sowie auf der jeweiligen Synchronverbindung in komprimierter Form durchgeführt wird. Damit ist der Vorteil verbunden, daß die gesamten Ladevorgänge unter Benutzung spezieller Übertragungsverfahren weiter beschleunigt werden können.

Gemäß Anspruch 6 ist vorgesehen, daß das Segmentieren von Programmen bzw. Daten vor Inbetriebnahme des Kommunikationssystems bzw. vor der Neueinbringung des Programms in ein bereits laufendes Kommunikationssystem durchgeführt wird, die Programme bzw. Daten auf dem Speichermedium segmentiert abgespeichert werden und in einer Tabelle eine funktionelle Zuordnung der jeweiligen Programmsegmente bzw. Datensegmente zu einer bestimmten peripheren Einrichtung gespeichert wird. Damit ist der Vorteil verbunden, daß insbesondere nach einem aufgetretenen Fehlverhalten der Wiederanlauf des Kommunikationssystems, bei dem die entsprechenden Ladevorgänge stattfinden, in schneller zeitlicher Abfolge durchgeführt werden kann.

Gemäß Anspruch 7 ist vorgesehen, daß Programme bzw. Daten in nicht segmentierter Form auf dem Speichermedium abgespeichert werden, die Segmentierung der Programme bzw. Daten erst bei Bedarf von der Steuereinrichtung durchgeführt wird und die Übertragung der Programmsegmente bzw. Datensegmente unter Benutzung einer Tabelle erfolgt, in welcher eine funktionelle Zuordnung der jeweiligen Programmsegmente bzw. Datensegmente zu bestimmten peripheren Einrichtungen gespeichert wird. Damit ist der Vorteil verbunden, daß die gesamte Software des Kommunikationssystems in unsegmentierter Weise auf dem Speichermedium abgespeichert werden kann.

Die Erfindung wird anhand eines Ausführungsbeispiels näher erläutert. Es zeigen

Figur 1    den Stand der Technik,

Figur 2    das erfindungsgemäße Verfahren.

Gemäß Figur 2 ist ein externes Speichermedium SP mit einer zentralen Steuereinrichtung CP aufgezeigt. Diese Einrichtungen sind über gedoppelte Verbindungsleitungen V1 an ein Paar von redundant angeordneten Nachrichtenverteilereinheiten MB0, MB1 herangeführt. Dabei werden die von dem Speichermedium SP über die zentrale Steuereinrichtung CP ausgehenden Informationen über beide Verbindungsleitungen V1 übertragen. Weiterhin sind die Nachrichtenverteilereinheiten MB0, MB1 über weitere Verbindungsleitungen V2 an Paare von peripheren Einrichtungen $PE_i$ derart angeschlossen, daß die Nachrichtenverteilereinheit MB0 mit allen peripheren Einrichtungen $PE_{i-x}$ und $PE_{i-y}$ aller Paare von redundant angeordneten peripheren Einrichtungen $PE_i$ verbunden ist. In gleicher Weise ist die Nachrichtenverteilereinheit MB1 mit allen peripheren Einrichtungen $PE_{i-x}$ sowie $PE_{i-y}$ aller Paare von redundant angeordneten peripheren Einrichtungen $PE_i$ verbunden. Dies bedeutet, daß jede periphere Einrichtung $PE_{i-x}$, $PE_{i-y}$ aller Paare von redundant angeordneten peripheren Einrichtungen $PE_i$ sowohl mit der Nachrichtenverteilereinheit MB0 als auch mit der Nachrichtenverteilereinheit MB1 verbunden ist. Im weiteren sind beide periphere Einrichtungen $PE_{i-x}$, $PE_{i-y}$ aller Paare von redundant angeordneten peripheren Einrichtungen $PE_i$ über eine Synchronverbindung SYN miteinander verbunden.

Im folgenden wird davon ausgegangen, daß ein Programm P auf dem Speichermedium SP abgespeichert ist. Dieses Programm P soll in die peripheren Einrichtungen $PE_i$ geladen werden. Das Laden erfolgt in der Regel bei Inbetriebnahme des Kommunikationssystems oder bei Ausfall peripherer Einrichtungen, die im folgenden wieder hochgefahren werden müssen.

Als Bedingung wird zunächst angenommen, daß die Übertragungsleistung der Synchronverbindung weniger als doppelt so groß ist wie die Übertragungsleistung über eine Verbindungsleitung V2. In diesem Fall wird das Programm P in für die peripheren Einrichtungen $PE_i$ gemeinsame Ladesegmente C1 und C2 sowie in spezifische Ladesegmente LX1, LX2 bzw. LY1, LY2 aufgeteilt. Dabei werden die gemeinsamen Ladesegmente C1 sowie die spezifischen Ladesegmente LX1 und die spezifischen Ladesegmente LY1 über die Verbindungsleitung V1 zur Nachrichtenverteilereinheit MB0 übertragen. In gleicher Weise werden die zweiten gemeinsamen Ladesegmente C2 sowie die spezifischen Ladesegmente LX2 und die spezifischen Ladesegmente LY2 über die andere Verbindungsleitung V1 zur Nachrichtenverteilereinheit MB1 übertragen. Im weiteren werden die spezifischen Ladesegmente LX1 über die Verbindungsleitungen V2 zu den peripheren Einrichtungen $PE_{i-x}$ hin übertragen. In gleicher Weise werden von der Nachrichtenverteilereinheit MB0 die spezifischen Ladesegmente LX1 über die Verbindungsleitungen V2 zu den peripheren Einrichtungen $PE_{i-y}$ hin übertragen.

Weiterhin werden von der Nachrichtenverteilereinheit MB1 die spezifischen Ladesegmente LX2 über die Verbindungsleitungen V2 zu den peripheren Einrichtungen $PE_{i-x}$ und die spezifischen Ladesegmente LY2 über die in Frage kommenden Verbindungsleitungen V2 zu den peripheren Einrichtungen $PE_{i-y}$ übertragen.

Somit sind in den peripheren Einrichtungen $PE_{i-x}$ die spezifischen Ladesegmente LX1 und LX2 sowie in den peripheren Einrichtungen $PE_{i-y}$ die spezifischen Ladesegmente LY1 und LY2 abgespeichert. Beide peripheren Einrichtungen $PE_{i-x}$, $PE_{i-y}$ des jeweiligen Paares von redundant angeordneten peripheren Einrichtungen $PE_i$ müssen jedoch identische Programme bzw. Daten abgespeichert haben, wenn im Fehlerfall auf die jeweilige andere periphere Einrichtung umgeschaltet werden soll. Zu diesem Zweck findet zeitgleich zu den Ubertragungsvorgängen über die Verbindungsleitung V2 ein Austausch der spezifischen Ladesegmente LX1, LX2 bzw. LY1, LY2 über die Synchronverbindung SYN statt. Da die Ubertragungsleistung des Synchronisierkanals weniger als doppelt so groß ist wie die Übertragungsleistung über eine Verbindungsleitung V2, können diese Ubertragungsvorgänge nur mit "Rückstau" durchgeführt werden. Die Zeit zum Abbau dieses Rückstaues wird daher zur parallelen Übertragung der gemeinsamen Ladesegmente C1 und C2 über die Verbindungsleitungen V2 genutzt. Sofort nachdem alle spezifischen Ladesegmente LX1 und LY1 in die jeweiligen peripheren Einrichtungen geladen sind, werden die gemeinsamen Ladesegmente C1 zu den peripheren Einrichtungen $PE_i$ übertragen. In gleicher Weise werden sofort nach dem Laden der spezifischen Ladesegmente LX2 und LY2 in die jeweiligen peripheren Einrichtungen die gemeinsamen Ladesegmente C2 zu den peripheren Einrichtungen $PE_i$ übertragen. Dabei werden die Ladesegmente C1 von der Nachrichtenverteilereinheit MB0 über die Verbindungsleitungen V2 zu den peripheren Einrichtungen $PE_{i-x}$, $PE_{i-y}$ sowie die Ladesegmente C2 von der Nachrichtenverteilereinheit MB1 über die Verbindungsleitungen V2 zu der peripheren Einrichtungen $PE_{i-x}$ und $PE_{i-y}$ übertragen.

Damit sind nach dem letzten Übertragungsvorgang in allen peripheren Einrichtungen $PE_{i-x}$, $PE_{i-y}$ die gemeinsamen Ladesegmente C1 und C2 sowie die spezifischen Ladesegmente LX1, LX2, LY1, LY2 abgespeichert.

Falls die Übertragungsleistung der Synchronverbindung SYN mindestens doppelt so groß ist wie die Übertragungsleistung einer der Verbindungsleitungen V2 wird auf die Einteilung in gemeinsame Ladesegmente verzichtet. In diesem Fall wird das auf dem Speichermedium SP abgespeicherte Programm P lediglich in spezifische Ladesegmente LX1, LX2, LY1, LY2 aufgeteilt. Die Übertragung dieser Ladesegmente in die peripheren Einrichtungen erfolgt dann in gleicher Weise wie oben beschrieben.

Die soeben beschriebenen Vorgehensweisen sind allerdings nicht auf das Laden eines Programmes P beschränkt; vielmehr lassen sich nach dem gleichen Prinzip auf dem Speichermedium SP abgespeicherte Daten D in gleicher Weise segmentieren und zu den in Frage kommenden peripheren Einrichtungen $PE_i$ hin übertragen. Beim Laden von Programmen P bzw. Daten D können in einer Ausgestaltung der Erfindung besondere Ubertragungsverfahren zur Anwendung gelangen. Eines dieser Ubertragungsverfahren ist beispielsweise die Verwendung eines in der Ubertragungstechnik als Kompressionsalgorithmus bekannten Prinzips.

Eine weitere Ausgestaltung der Erfindung besteht darin, daß die Programme $P_i$ bzw. Daten $D_i$ vor Inbetriebnahme des Kommunikationssystems segmentiert werden. Dies bedeutet, daß die betreffenden Programme $P_i$ und Daten $D_i$ auf dem Speichermedium SP bereits segmentiert abgespeichert sind und eine Tabelle T lediglich eine funktionelle Zuordnung der jeweiligen Programmsegmente bzw. Datensegmente zu einer bestimmten peripheren Einrichtung beinhaltet. In diesem Fall können dann bei Inbetriebnahme des Kommunikationssystems die Ubertragungsvorgänge in die jeweiligen peripheren Einrichtungen $PE_i$ unmittelbar erfolgen.

Eine weitere Ausgestaltung der Erfindung besteht darin, daß die Programme $P_i$ bzw. Daten $D_i$ in nichtsegmentierter Form auf dem Speichermedium SP abgespeichert sind. Dies bedeutet, daß beim Übertragen der Programme $P_i$ bzw. Daten $D_i$ zunächst die Segmentierung durchgeführt werden muß. Die Übertragung der Programmsegmente bzw. Datensegmente erfolgt dann ebenso unter Benutzung einer Tabelle T, wie soeben beschrieben.

Abschließend sei noch der erfindungsgemäße Ladezeitgewinn für ein konkretes Realisierungsbeispiel errechnet:

Im folgenden wird davon ausgegangen, daß die Länge des zu ladenden Programms P

$$|L| = 3 \text{ MB}$$

die Nutzdatenrate auf den Verbindungsleitungen V2

$$G = 5{,}5 \text{ KB/s}$$

die Nutzdatenrate auf der Synchronverbindung SYN

$$g = 4{,}8 \text{ KB/s}$$

sei.

Eine optimale Segmentierung ist gekennzeichnet durch:

Länge der gemeinsamen Ladesegmente

$$|C| = |C1| + |C2| = 2\,|C1|$$

Länge der x-spezifischen Ladesegmente

$$|Lx| = |LX1| + |LX2| = 2\,|LX1|$$

Länge der y-spezifischen Ladesegmente

$$|Ly| = |LY1| + |LY2| = 2\,|LY2| = |Lx|$$

Die Bedingung für das Verfahren gemäß Patentanspruch 1 lautet dann:

Ladezeit über beide Verbindungsleitungen V2 $\geq$ Ladezeit

über die Synchronverbindung SYN, oder mathematisch

betrachtet:

$$(|L| - |Lx|) / (2 * G) \geq |Lx| / g$$

oder

$$|Lx| \leq |L| * g / (2G + g)$$

Als optimale Dimensionierung erhält man damit:

$$|Lx| = |LY| = 0{,}9 \text{ MB und } |C| = 1{,}2 \text{ MB}$$

Bei Verwendung herkömmlicher Verfahren wird das zu ladende Programm über die jeweiligen Verbindungsleitungen V2 in beide periphere Einrichtungen $PE_{i-x}$, $PE_{i-y}$ geladen. Mathematisch betrachtet liefert dies die Ladezeit:

$$|L| / 2G = 273 \text{ s}$$

Unter Verwendung des erfindungsgemäßen Verfahrens ergibt sich für die Ladezeit:

$$(|L_x| + |c|) / 2\,G = 191 \text{ s}$$

Dies bedeutet also eine Reduktion um ca. 30 %.

Bei einer hinreichend leistungsfähigen Synchronverbindung SYN (2G ≤ g) ergibt sich die optimale Segmentierung:

$$|L_x| = |L_y| = |L|/2 \text{ und } |c| = 0$$

Dadurch wird eine Reduktion der Ladezeit von ca. 50 % erreicht.

**Patentansprüche**

1. Verfahren zur Inbetriebnahme von dezentralen, redundanten Einrichtungen in Kommunikationssystemen,

   - mit wenigstens einem Speichermedium (SP) und wenigstens einer Steuereinrichtung (CP), die über erste Verbindungsleitungen (V1), über die Nachrichten übertragen werden, an wenigstens ein Paar einander zugeordneter, redundanter Nachrichtenverteilereinheiten (MB0, MB1) angeschlossen sind,
   - mit Paaren einander zugeordneter, redundanter peripherer Einrichtungen ($PE_i$), die über zweite Verbindungsleitungen (V2), über die ebenfalls Nachrichten übertragen werden, mit den redundanten Nachrichtenverteilereinheiten (MB0, MB1) verbunden sind, wobei eine periphere Einrichtung ($PE_{i-x}$, $PE_{i-y}$) eines redundant zugeordneten Paares von peripheren Einrichtungen ($PE_i$) mit einer jeden Nachrichtenverteilereinheit des jeweiligen Paares von Nachrichtenverteilereinheiten (MB0, MB1) verbunden ist und wobei die einem Paar von redundant zugeoroneten peripheren Einrichtungen ($PE_i$) zugehörigen peripheren Einrichtungen ($PE_{i-x}$, $PE_{i-y}$) über eine Synchronverbindung (SYN) miteinander verbunden sind, über welche ebenfalls Nachrichten übertragen werden,
   - und mit wenigstens einem Programm (P), das auf dem jeweiligen Speichermedium (SP) abgespeichert ist und das während des Ladevorgangs zu den peripheren Einrichtungen ($PE_i$) über die ersten und zweiten Verbindungsleitungen (V1, V2) in Segmenten zu jeder peripheren Einrichtung ($PE_i$) übertragen wird,

   **dadurch gekennzeichnet,**
   **daß** in einem ersten Verfahrensschritt das jeweilige Programm (P) in für alle peripheren Einrichtungen ($PE_{i-x}$, $PE_{i-y}$) gemeinsame Ladesegmente (C), bestehend aus ersten und zweiten gemeinsamen, aus Ladesegmenten bestehenden Anteilen (C1, C2), und in für die peripheren Einrichtungen ($PE_{i-x}$ und $PE_{i-y}$) spezifische, aus Ladesegmenten bestehende Anteile (LX1, LX2, LY1, LY2) aufgeteilt wird, daß in einem zweiten Verfahrensschritt erste spezifische Ladesegmente (LX1) über die eine Nachrichtenverteilereinheit (MB0) des jeweiligen Paares von redundant angeordneten Nachrichtenverteilereinheiten (MB0, MB1) zu der einen peripheren Einrichtung ($PE_{i-x}$) aller redundant angeordneten Paare von peripheren Einrichtungen ($PE_i$) übertragen werden, zweite spezifische Ladesegmente (LY1) über dieselbe Nachrichtenverteilereinheit (MB0) des jeweiligen Paares von redundant angeordneten Nachrichtenverteilereinheiten (MB0, MB1) zu der anderen peripheren Einrichtung ($PE_{i-y}$) aller redundant angeordneten Paare von peripheren Einrichtungen ($PE_i$) übertragen werden, dritte spezifische Ladesegmente (LX2) über die andere Nachrichtenverteilereinheit (MB1) des jeweiligen Paares von redundant angeordneten Nachrichtenverteilereinheiten (MB0, MB1) zu der einen peripheren Einrichtung ($PE_{i-x}$) aller Paare von redundant angeordneten peripheren Einrichtungen ($PE_i$) übertragen werden und vierte spezifische Ladesegmente (LY2) ebenfalls über die andere Nachrichtenverteilereinheit (MB1) des jeweiligen Paares von redundant angeordneten Nachrichtenverteilereinheiten (MB0, MB1) zu der anderen peripheren Einrichtung ($PE_{i-y}$) aller Paare von redundant angeordneten peripheren Einrichtungen ($PE_i$) übertragen werden,
   **daß** in einem dritten Verfahrensschritt zeitgleich zu dem zweiten Verfahrensschritt die spezifischen Anteile (LX1, LX2, LY1, LY2) über die Synchronverbindung (SYN) zwischen beiden peripheren Einrichtungen ($PE_{i-x}$ und $PE_{i-y}$) aller redundant angeordneten Paare von peripheren Einrichtungen ($PE_i$) ausgetauscht und abgespeichert werden und
   **daß** in einem vierten Verfahrensschritt nach Abschluß des zweiten Verfahrensschrittes und zeitgleich zum dritten Verfahrensschritt der erste gemeinsame Ladesegmentanteil (C1) über die eine Nachrichtenverteilereinheit (MB0) des jeweiligen Paares von redundanten Nachrichtenverteilereinheiten (MB0, MB1) zu den peripheren Einrichtungen ($PE_{i-x}$, $PE_{i-y}$) aller redundant angeordneten Paare von peripheren Einrichtungen ($PE_i$) sowie der zweite gemeinsame Ladesegmentanteil (C2) über die andere Nachrichtenverteilereinheit (MB1) des jeweiligen Paares von redundanten Nachrichtenverteilereinheiten (MB0, MB1) ebenso zu den peripheren Einrichtungen ($PE_{i-x}$ und $PE_{i-y}$) aller redundant angeordneten Paare von peripheren Einrichtungen ($PE_i$) übertragen werden.

2. Verfahren zur Inbetriebnahme von dezentralen, redundanten Einrichtungen in Kommunikationssystemen,

- mit wenigstens einem Speichermedium (SP) und wenigstens einer Steuereinrichtung (CP), die über erste Verbindungsleitungen (V1), über die Nachrichten übertragen werden, an wenigstens ein Paar einander zugeordneter, redundanter Nachrichtenverteilereinheiten (MB0, MB1) angeschlossen sind,
- mit Paaren einander zugeordneter, redundanter peripherer Einrichtungen (PE$_i$), die über zweite Verbindungsleitungen (V2), über die ebenfalls Nachrichten übertragen werden, mit den redundanten Nachrichtenverteilereinheiten (MB0, MB1) verbunden sind, wobei eine periphere Einrichtung (PE$_{i-x}$, PE$_{i-y}$) eines redundant zugeordneten Paares von peripheren Einrichtungen (PE$_i$) mit einer jeden Nachrichtenverteilereinheit des jeweiligen Paares von Nachrichtenverteilereinheiten (MB0, MB1) verbunden ist und wobei die einem Paar von redundant zugeordneten peripheren Einrichtungen (PE$_i$) zugehörigen peripheren Einrichtungen (PE$_{i-x}$, PE$_{i-y}$) über eine Synchronverbindung (SYN) miteinander verbunden sind, über welche ebenfalls Nachrichten übertragen werden,
- und mit wenigstens einem Programm (P), das auf dem jeweiligen Speichermedium (SP) abgespeichert ist und das während des Ladevorgangs zu den peripheren Einrichtungen (PE$_i$) über die ersten und zweiten Verbindungsleitungen (V1, V2) in Segmenten zu jeder peripheren Einrichtung (PE$_i$) übertragen wird,

**dadurch gekennzeichnet,**
**daß** in einem ersten Verfahrensschritt das jeweilige Programm (P) in spezifische, aus Ladesegmenten bestehende Anteile (LX1, LX2, LY1, LY2) aufgeteilt wird,
**daß** in einem zweiten Verfahrensschritt erste spezifische Ladesegmente (LX1) über die eine Nachrichtenverteilereinheit (MB0) des jeweiligen Paares von redundant angeordneten Nachrichtenverteilereinheiten (MB0, MB1) zu der einen peripheren Einrichtung (P$_{i-x}$) aller redundant angeordneten Paare von peripheren Einrichtungen (PE$_i$) übertragen werden, zweite spezifische Ladesegmente (LY1) über dieselbe Nachrichtenverteilereinheit (MB0) des jeweiligen Paares von redundant angeordneten Nachrichtenverteilereinheiten (MB0, MB1) zu der anderen peripheren Einrichtung (PE$_{i-y}$) aller redundant angeordneten Paare von peripheren Einrichtungen (PE$_i$) übertragen werden, dritte spezifische Ladesegmente (LX2) über die andere Nachrichtenverteilereinheit (MB1) des jeweiligen Paares von redundant angeordneten Nachrichtenverteilereinheiten (MB0, MB1) zu der einen peripheren Einrichtung (PE$_{i-y}$) aller Paare von redundant angeordneten peripheren Einrichtungen (PE$_i$) übertragen werden und vierte spezifische Ladesegmente (LY2) ebenfalls über die andere Nachrichtenverteilereinheit (MB1) des jeweiligen Paares von redundant angeordneten Nachrichtenverteilereinheiten (MB0, MB1) zu der anderen peripheren Einrichtung (PE$_{i-y}$) aller Paare von redundant angeordneten peripheren Einrichtungen (PE$_i$) übertragen werden und
**daß** in einem dritten Verfahrensschritt zeitgleich zu dem zweiten Verfahrensschritt die spezifischen Anteile (LX1, LX2, LY1, LY2) über die Synchronverbindung (SYN) zwischen beiden peripheren Einrichtungen (PE$_{i-x}$ und PE$_{i-y}$) des jeweiligen redundant angeordneten Paares von peripheren Einrichtungen (PE$_i$) ausgetauscht werden.

3. Verfahren nach Anspruch 1, 2,
**dadurch gekennzeichnet,**
**daß** mehrere Programme (P01 ... Pn) zeitgleich in n unterschiedliche Gesamtheiten peripherer Einrichtungen (PE$_i$) geladen werden.

4. Verfahren nach Anspruch 1, 2 oder 3,
**dadurch gekennzeichnet,**
**daß** das Segmentieren und Laden von auf dem jeweiligen Speichermedium (SP) abgelegten Ladedaten (D) in die peripheren Einrichtungen (PE$_i$) in entsprechender Weise durchgeführt wird, nachdem das wenigstens eine Programm (P) bzw. die mehreren Programme (P$_1$... P$_n$) in die peripheren Einrichtungen (PE$_i$) geladen wurde.

5. Verfahren nach einem der vorstehenden Ansprüche,
**dadurch gekennzeichnet,**
**daß** das Übertragen der jeweiligen Programm- bzw. Datensegmente über die ersten und zweiten Verbindungsleitungen (V1, V2) sowie über die jeweilige Synchronverbindung (SYN) in komprimierter Form durchgeführt wird.

6. Verfahren nach einem der vorstehenden Ansprüche,
**dadurch gekennzeichnet,**
**daß** das Segmentieren von Programmen (P) bzw. Daten (D) vor Inbetriebnahme des Kommunikationssystems bzw. vor der Neueinbringung eines zusätzlichen Programms (P$_{n+1}$) in ein bereits laufendes Kommunikationssystem durchgeführt wird, die Programme (P) bzw. Daten (D) auf dem Speichermedium (SP) segmentiert abgespeichert werden und in einer Tabelle (T) eine funktionelle Zuordnung der jeweiligen Programmsegmente bzw. Datensegmente zu einer bestimmten peripheren Einrichtung (PE$_i$) gespeichert wird.

7. Verfahren nach einem der Ansprüche 1 bis 5,
**dadurch gekennzeichnet,**
**daß** Programme (P) bzw. Daten (D) in nicht segmentierter Form auf dem Speichermedium (SP) abgespeichert und während des Betriebs des Kommunikationssystems in die peripheren Einrichtungen (PE$_i$) geladen werden, indem die Segmentierung der Programme (P) bzw. Daten (D) erst bei Bedarf von der Steuereinrichtung (CP) durchgeführt wird und die Übertragung der Programmsegmente bzw. Datensegmente unter Benutzung eine Tabelle (T) erfolgt, in welcher eine funktionelle Zuordnung der jeweiligen Programmsegmente bzw. Datensegmente zu einer bestimmten peripheren Einrichtung (PE$_i$) gespeichert wird.

**Claims**

1. Method for putting decentralised, redundant devices in communication systems into operation

   - with at least one storage medium (SP) and at least one control device (CP) which are connected via first trunk circuits (V1), via which messages are transmitted, to at least one pair of mutually assigned, redundant message distribution units (MB0, MB1),
   - with pairs of mutually assigned, redundant peripheral devices (PE$_i$) which are connected via second trunk circuits (V2), via which messages are also transmitted, to the redundant message distribution units (MB0, MB1), with one peripheral device (PE$_{i-x}$, PE$_{i-y}$) of a redundantly assigned pair of peripheral devices (PE$_i$) being connected to each message distribution unit of the respective pair of message distribution units (MB0, MB1) and with peripheral devices (PE$_{i-x}$, PE$_{i-y}$) associated with a pair of redundantly assigned peripheral devices (PE$_i$) being interconnected via a synchronous connection (SYN) via which messages are also transmitted
   - and with at least one program (P) which is stored on the relevant storage medium (SP) and which during the process of loading to the peripheral devices (PE$_i$) is transferred in segments via the first and second trunk circuits (V1, V2) to each peripheral device (PE$_i$),

   **characterised in that**
   the respective program (P) is split in a first method step into loading segments (C) which are shared by all peripheral devices (PE$_{i-x}$, PE$_{i-y}$) and which consist of first and second shared portions (C1, C2) consisting of loading segments, and into portions (LA, LX2, LY1, LY2) which consist of loading segments and which are specific for the peripheral devices (PE$_{i-x}$ and PE$_{i-y}$),
   **in that**, in a second method step, first specific loading segments (LA) are transferred via the one message distribution unit (MB0) of the respective pair of redundantly configured message distribution units (MB0, MB1) to the one peripheral device (PE$_{i-x}$) of all redundantly assigned pairs of peripheral devices (PE$_i$), second specific loading segments (LY1) are transferred via the same message distribution unit (MB0) of the respective pair of redundantly configured message distribution units (MB0, MB1) to the other peripheral device (PE$_{i-y}$) of all redundantly configured pairs of peripheral devices (PE$_i$), third specific loading segments (LX2) are transferred via the other message distribution unit (MB1) of the respective pair of redundantly configured message distribution units (MB0, MB1) to the one peripheral device (PE$_{i-x}$) of all pairs of redundantly configured peripheral devices (PE$_i$) and fourth specific loading segments (LY2) are also transferred via the other message distribution unit (MB1) of the respective pair of redundantly configured message distribution units (MB0, M81) to the other peripheral device (PE$_{i-y}$) of all pairs of redundantly configured peripheral devices (PE$_i$),
   **in that**, in a third method step and simultaneously with the second method step, the specific portions (LX1, LX2, LY1, LY2) are exchanged via the synchronous connection (SYN) between both peripheral devices (PE$_{i-x}$ and PE$_{i-y}$) of all redundantly configured pairs of peripheral devices (PE$_i$) and are stored and
   **in that**, in a fourth method step, on completion of the second method step and simultaneously with the third method step the first shared loading segment portion (C1) is transferred via the one message distribution unit (MB0) of the respective pair of redundant message distribution units (MB0, MB1) to the peripheral devices (PE$_{i-x}$, PE$_{i-y}$) of all redundantly configured pairs of peripheral devices (PE$_i$) and the second shared loading segment portion (C2) is transferred via the other message distribution unit (MB1) of the respective pair of redundant message distribution units (MB0, MB1) also to the peripheral devices (PE$_{i-x}$ and PE$_{i-y}$) of all redundantly configured pairs of peripheral devices (PE$_i$).

2. Method for putting decentralised, redundant devices in communication systems into operation

- with at least one storage medium (SP) and at least one control device (CP) which are connected via first trunk circuits (V1), via which messages are transmitted, to at least one pair of mutually assigned, redundant message distribution units (MB0, MB1),
- with pairs of mutually assigned, redundant peripheral devices (PE$_i$) which are connected via second trunk circuits (V2), via which messages are also transmitted, to the redundant message distribution units (MB0, MB1), with one peripheral device (PE$_{i-x}$, PE$_{i-y}$) of a redundantly assigned pair of peripheral devices (PE$_i$) being connected to each message distribution unit of the respective pair of message distribution units (MB0, MB1) and with peripheral devices (PE$_{i-x}$, PE$_{i-y}$) associated with a pair of redundantly assigned peripheral devices (PE$_i$) being interconnected via a synchronous connection (SYN) via which messages are also transmitted,
- and with at least one program (P) which is stored on the relevant storage medium (SP) and which during the process of loading to the peripheral devices (PE$_i$) is transferred in segments via the first and second trunk circuits (V1, V2) to each peripheral device (PE$_i$),

**characterised in that**
the respective program (P) is split in a first method step into specific portions (LX1, LX2, LY1, LY2) consisting of loading segments,
**in that**, in a second method step, first specific loading segments (LX1) are transferred via the one message distribution unit (MB0) of the respective pair of redundantly configured message distribution units (MB0, MB1) to the one peripheral device (PE$_{i-x}$) of all redundantly configured pairs of peripheral devices (PE$_i$), second specific loading segments (LY1) are transferred via the same message distribution unit (MB0) of the respective pair of redundantly configured message distribution units (MB0, MB1) to the other peripheral device (PE$_{i-y}$) of all redundantly configured pairs of peripheral devices (PE$_i$), third specific loading segments (LX2) are transferred via the other message distribution unit (MB1) of the respective pair of redundantly configured message distribution units (MB0, MB1) to the one peripheral device (PE$_{i-y}$) of all pairs of redundantly configured peripheral devices (PE$_i$) and fourth specific loading segments (LY2) are also transferred via the other message distribution unit (MB1) of the respective pair of redundantly configured message distribution units (MB0, MB1) to the other peripheral device (PE$_{i-y}$) of all pairs of redundantly configured peripheral devices (PE$_i$) and
**in that**, in a third method step and simultaneously with the second method step, the specific portions (LX1, LX2, LY1, LY2) are exchanged via the synchronous connection (SYN) between both peripheral devices (PE$_{i-x}$ and PE$_{i-y}$) of the respective redundantly configured pair of peripheral devices (PE$_i$).

3. Method according to claim 1 and 2,
   **characterised in that**
   a plurality of programs (P01 ... Pn) are loaded simultaneously into n different totalities of peripheral devices (PE$_i$).

4. Method according to claim 1, 2 or 3,
   **characterised in that**
   segmenting and loading of loading data (D) stored on the relevant storage medium (SP) into the peripheral devices (PE$_i$) is carried out in an analogous manner after loading of the at least one program (P) or, as the case may be, a plurality of programs (P$_1$... P$_n$) into the peripheral devices (PE$_i$).

5. Method according to one of the preceding claims,
   **characterised in that**
   the relevant program or data segments are transferred via the first and second trunk circuits (V1, V2) and via the relevant synchronous connection (SYN) in compressed form.

6. Method according to one of the preceding claims,
   **characterised in that**
   the segmenting of programs (P) or data (D) is performed before the communication system is put into operation or before an additional program (P$_{n+1}$) is newly installed on an already running communication system, the programs (P) or data (D) are stored on the storage medium (SP) in segmented form and a functional assignment of the respective program segments or data segments to a specific peripheral device (PE$_i$) is stored in a table (T).

7. Method according to one of the claims 1 to 5,
   **characterised in that**
   programs (P) or data (D) are stored on the storage medium (SP) in non-segmented form and are loaded into the peripheral devices (PE$_i$) while the communication system is in operation whereby segmenting of the programs (P) or data (D) is only performed by the control device (CP) as and when required and the program segments or data segments are transferred using a table (T) in which a functional assignment of the respective program segments or data segments to a specific peripheral device ($PE_i$) is stored.

## Revendications

1. Procédé pour la mise en service d'appareils décentralisés et redondants dans des systèmes de communication,

   - avec au moins un support de stockage (SP) et au moins un appareil de commande (CP), qui sont raccordés par des premières lignes de liaison (V1), par lesquelles des informations sont transmises à au moins une paire d'unités de distribution d'informations (MB0, MB1) attribuées réciproquement et redondantes,
   - avec des paires d'appareils périphériques ($PE_i$) réciproquement attribués et redondants, qui sont reliés par des secondes lignes de liaison (V2), par lesquelles également des informations sont transmises, aux unités de distribution d'informations (MB0, MB1) redondantes, un appareil périphérique ($PE_{i-x}$, $PE_{i-y}$) d'une paire, attribuée de façon redondante d'appareils périphériques ($PE_i$) étant relié à chaque unité de distribution d'informations de la paire respective d'unités de distribution d'informations (MB0, MB1) et les appareils ($PE_{i-x}$, $PE_{i-y}$) périphériques appartenant à une paire d'appareils périphériques ($PE_i$) attribués de façon redondante étant reliés entre eux au moyen d'une liaison synchrone (SYN), par laquelle des informations sont également transmises,
   - et avec au moins un programme (P), qui est mémorisé sur le support de stockage (SP) concerné et qui est transmis pendant l'opération de chargement aux appareils périphériques ($PE_i$) au moyen des première et seconde lignes de liaison (V1, V2) en segments à chaque appareil périphérique ($PE_i$),

   **caractérisé en ce que**

   dans une première étape du procédé le programme respectif (P) est subdivisé en segments de chargement communs (C) pour tous les appareils périphériques ($PE_{i-x}$, $PE_{i-y}$) comprenant des première et des seconde parties (C1, C2) communes et à base de segments de chargement, et en parties (LX1, LX2, LY1, LY2) spécifiques aux appareils périphériques ($PE_{i-x}$ et $PE_{i-y}$) et à base de segments de chargement, **en ce que** dans une seconde étape du procédé des premiers segments de chargement (LX1) spécifiques sont transmis au moyen d'une unité de distribution d'informations (MB0) de la paire respective d'unités de distribution d'informations (MB0, MB1) disposées de façon redondante à un appareil périphérique ($PE_{i-x}$) de toutes les paires disposées de façon redondante d'appareils périphériques ($PE_i$), des seconds segments de chargement (LY1) spécifiques sont transmis au moyen de la même unité de distribution d'informations (MB0) de la paire respective d'unités de distribution d'informations (MB0, MB1) disposées de façon redondante à l'autre appareil périphérique ($PE_{i-y}$) de toutes les paires disposées de façon redondante d'appareils périphériques ($PE_i$), des troisièmes segments de chargement (LX2) spécifiques sont transmis par l'intermédiaire de l'autre unité de distribution d'informations (MB1) de la paire respective d'unités de distribution d'informations (MB0, MB1) disposées de façon redondante à un appareil périphérique ($PE_{i-x}$) de toutes les paires d'appareils périphériques ($PE_i$) disposées de façon redondante et des quatrièmes segments de chargement (LY2) spécifiques sont également transmis au moyen de l'autre unité de distribution d'informations (MB1) de la paire respective d'unités de distribution d'informations (MB0, MB1) disposées de façon redondante à l'autre appareil périphérique ($PE_{i-y}$) de toutes les paires d'appareils périphériques ($PE_i$) disposés de façon redondante, **en ce que** dans une troisième étape du procédé, et simultanément avec la seconde étape du procédé, les parties (LX1, LX2, LY1, LY2) spécifiques sont échangées au moyen de la liaison synchrone (SYN) entre deux appareils périphériques ($PE_{i-x}$ et $PE_{i-y}$) de toutes les paires disposées de façon redondante d'appareils périphériques ($PE_i$) et sont mémorisées et

   **en ce que** dans une quatrième étape du procédé, après la fin de la seconde étape du procédé et en même temps que la troisième étape du procédé, la première partie commune de segment de chargement (C1) est transmise au moyen d'une unité de distribution d'informations (MB0) de la paire respective d'unités redondantes de distribution d'informations (MB0, MB1) aux appareils périphériques ($PE_{i-x}$, $PE_{i-y}$) de toutes les paires disposées de façon redondante d'appareils périphériques ($PE_i$) et la seconde partie commune de segment de chargement (C2) est transmise au moyen de l'autre unité de distribution d'informations (MB1) de la paire respective d'unités redondantes de distribution d'informations (MB0, MB1) de la même façon aux appareils périphériques ($PE_{i-x}$ et $PE_{i-y}$) de toutes les paires disposées de façon redondante d'appareils périphériques ($PE_i$).

2. Procédé pour la mise en service d'appareils décentralisés et redondants dans des systèmes de communication,

   - avec au moins un support de stockage (SP) et au moins un appareil de commande (CP), qui sont raccordés au moyen de premières lignes de liaison (V1), par lesquelles les informations sont transmises, à au moins une paire d'unités de distribution d'informations (MB0, MB1) réciproquement attribuées et redondantes,

- avec des paires d'appareils périphériques ($PE_i$) redondants et réciproquement attribués, qui sont reliés au moyen de secondes lignes de liaison (V2), par lesquelles des informations sont également transmises, aux unités redondantes de distribution d'informations (MB0, MB1), un appareil périphérique ($PE_{i-x}$, $PE_{i-y}$) d'une paire attribuée de façon redondante d'appareils périphériques ($PE_i$) étant relié à chaque unité de distribution d'informations de la paire respective d'unités de distribution d'informations (MB0, MB1) et les appareils périphériques ($PE_{i-x}$, $PE_{i-y}$) appartenant à une paire d'appareils périphériques ($PE_i$) attribués de façon redondante étant reliés entre eux au moyen d'une liaison synchrone (SYN), par laquelle des informations sont également transmises,

- et avec au moins un programme (P), qui est mémorisé sur le support de stockage (SP) respectif et qui est transmis pendant l'opération de chargement aux appareils périphériques ($PE_i$) au moyen des première et seconde lignes de liaison (V1, V2) en segments à chaque appareil périphérique ($PE_i$),

**caractérisé en ce que**
dans une première étape du procédé le programme respectif (P) est subdivisé en parties (LX1, LX2, LY1, LY2) spécifiques et composés de segments de chargement,
**en ce que**, dans une seconde étape de procédé, les premiers segments de chargement (LX1) spécifiques sont transmis au moyen d'une unité de distribution d'informations (MB0) de la paire respective d'unités de distribution d'informations (MB0, MB1) disposées de façon redondante à un appareil périphérique ($P_{i-x}$) de toutes les paires disposées de façon redondante d'appareils périphériques ($PE_i$), les seconds segments de chargement (LY1) spécifiques sont transmis au moyen de la même unité de distribution d'informations (MB0) de la paire respective d'unités de distribution d'informations (MB0, MB1) disposées de façon redondante à l'autre appareil périphérique ($PE_{i-y}$) de toutes les paires disposées de façon redondante d'appareils périphériques ($PE_i$), les troisièmes segments de chargement (LX2) spécifiques sont transmis au moyen de l'autre unité de distribution d'informations (MB1) de la paire respective d'unités de distribution d'informations (MB0, MB1) disposées de façon redondante à un appareil périphérique ($PE_{i-y}$) de toutes les paires d'appareils périphériques ($PE_i$) disposés de façon redondante et les quatrièmes segments de chargement (LY2) spécifiques sont transmis également au moyen de l'autre unité de distribution d'informations (MB1) de la paire respective d'unités de distribution d'informations (MB0, MB1) disposées de façon redondante à l'autre appareil périphérique ($PE_{i-y}$) de toutes les paires d'appareils périphériques ($PE_i$) disposés de façon redondante et **en ce que** dans une troisième étape du procédé, en même temps que la seconde étape du procédé, les parties (LX1, LX2, LY1, LY2) spécifiques sont échangées au moyen de la liaison synchrone (SYN) entre les deux appareils périphériques ($PE_{i-x}$ et $PE_{i-y}$) de la paire respective, disposée de façon redondante, d'appareils périphériques ($PE_i$).

**3.** Procédé selon la revendication 1, 2,
**caractérisé en ce que**
plusieurs programmes (P01 ... Pn) sont chargés simultanément dans n différentes entités d'appareils périphériques ($PE_i$).

**4.** Procédé selon la revendication 1, 2 ou 3,
**caractérisé en ce que**
la segmentation et le chargement de données de chargement (D) déposées sur le support de stockage respectif (SP) dans les appareils périphériques ($PE_i$) sont effectués de façon appropriée une fois que le au moins un programme (P) ou les plusieurs programmes ($P_1$ ... $P_n$) a ou ont été chargés dans les appareils périphériques ($PE_i$).

**5.** Procédé selon l'une quelconque des revendications précédentes,
**caractérisé en ce que**
la transmission des segments de programme ou de données respectifs est effectuée au moyen des première et seconde lignes de liaison (V1, V2) ainsi qu'au moyen de la liaison synchrone respective (SYN) sous une forme comprimée.

**6.** Procédé selon l'une quelconque des revendications précédentes,
**caractérisé en ce que**
la segmentation de programmes (P) ou de données (D) est effectuée avant la mise en service du système de communication ou avant la réintroduction d'un programme supplémentaire ($P_{n+1}$) dans un système de communication déjà en cours, les programmes (P) ou données (D) sont mémorisés de façon segmentée sur le support de stockage (SP) et une attribution fonctionnelle des segments de programme ou segments de données respectifs à un appareil périphérique ($PE_i$) défini est mémorisée dans un tableau (T).

**7.** Procédé selon l'une quelconque des revendications 1 à 5,
**caractérisé en ce que**
des programmes (P) ou des données (D) sont mémorisés dans une forme non segmentée sur le support de stockage (SP) et sont chargés pendant l'exploitation du système de communication dans les appareils périphériques ($PE_i$) par le fait que la segmentation des programmes (P) ou des données (D) n'est effectuée qu'en cas de besoin par l'appareil de commande (CP) et la transmission des segments de programme ou segments de données s'effectue en utilisant un tableau dans lequel une attribution fonctionnelle des segments de programme ou segments de données respectifs à un appareil périphérique ($PE_i$) défini est mémorisée.

**FIG 1**

**FIG 2**